# EUROPEAN PATENT SPECIFICATION

(11) **EP 1 245 811 B1**
(45) Date of publication and mention of the grant of the patent: **17.01.2007**
(21) Application number: 02100083.1
(22) Date of filing: 30.01.2002
(51) Int. Cl.: F02D 33/02, F02D 41/18, F02D 13/02

(54) **Fuel metering method for an engine operating with controlled auto-ignition**
Steuerung der Kraftstoffeinpritzung in einem Motor mit kontrollierter Selbstzündung
Commande de l'injection de carburant dans un moteur à auto-allumage commandé

(30) Priority: 28.03.2001 GB 0107774
(43) Date of publication of application: 02.10.2002
(73) Proprietor: Ford Global Technologies, LLC, Dearborn, MI 48126 (US)
(72) Inventor: Ma, Thomas, Tsoi-Hei, South Woodham Ferrers CM3 5YL (GB)
(74) Representative: Messulam, Alec Moses

(56) References cited:
- EP-A- 1 085 191
- WO-A-00/28197
- US-A- 6 039 026
- US-A- 6 082 342
- PATENT ABSTRACTS OF JAPAN vol. 2000, no. 20, 10 July 2001 (2001-07-10) & JP 2001 082221 A (NISSAN MOTOR CO LTD), 27 March 2001 (2001-03-27)

## Description

### Field of the invention

The present invention relates to a fuel metering method for setting a desired air-to-fuel ratio in the combustible mixture to a controlled auto-ignition engine, in which intake air is admitted through a wide open throttle and controlled indirectly by varying the mass of residual gases in the combustion chamber at the instant when the intake valve opens, by regulating the timing of the closing of the exhaust valve during the exhaust stroke.

### Background of the invention

Engines have previously been proposed in which EVC (exhaust valve closing) occurs early during the exhaust stroke to trap residual gases. At the same time, IVO (inlet valve opening) is delayed so that the trapped gases, that are compressed at the end of the exhaust stroke, are re-expanded at the start of the intake stroke, ideally without energy loss. When the inlet valve opens, the trapped gases are mixed with the fresh charge admitted by the intake valve to produce a mixture with high residual gas content which is hot and promotes auto-ignition. An example of such an engine is disclosed in WO00/28197.

In such an engine, load control can be effected by varying the timing of the closing of the exhaust valve (EVC) with the main throttle fully open. The variable EVC is effective in retaining a variable volume of residual gases in the engine cylinder and subsequently allowing a variable quantity of fresh intake air to fill the remainder of the cylinder. This intake air flow is not directly controlled and cannot be measured accurately by a conventional mass air flow meter because the flow occurs in short pulses. Also it cannot be estimated by the speed density method because there is no manifold vacuum and the volumetric efficiency of the engine is not defined.

Without direct control of the intake air and without accurate measurement or estimation of the intake air mass flow, there is a problem in setting the correct fuel flow to maintain a desired air-to-fuel ratio at all times under varying engine operating conditions.

### Summary of the invention

With a view to mitigating the foregoing problem, the present invention provides a fuel metering method for setting a desired air-to-fuel ratio in the combustible mixture to a controlled auto-ignition engine in which intake air is admitted through a wide open throttle and controlled indirectly by varying the mass of residual gases in the combustion chamber at the instant when the intake valve opens by regulating the timing of the closing of the exhaust valve during the exhaust stroke, the method comprising the steps of deriving a coarse estimation of the mass air flow into the engine based upon the timing of the closing of the exhaust valve, deriving a coarse estimation of the fuel quantity required based on the coarse estimation of mass air flow to achieve a desired air-to-fuel ratio to the engine, setting a nominal fuel supply quantity to the engine in accordance with the coarse estimation of the required fuel quantity, and modifying the nominal fuel quantity by closed-loop adjustment based on the deviation from a reference value of a reading from a sensor responsive to the oxygen content of the engine exhaust gases.

In a preferred embodiment, the exhaust gas oxygen sensor is a lambda sensor the output of which switches between two states to indicate the presence or absence of oxygen. In this case, the fuel quantity may be adjusted in the direction towards the switch point so that the air-to-fuel ratio to the engine is held at stoichiometry.

In an alternative embodiment, the exhaust gas oxygen sensor is a proportional sensor producing a signal having a value that varies continuously in dependence upon the oxygen content of the exhaust gases. In this case, the fuel quantity may be adjusted against a target air-to-fuel ratio in a direction to reduce the error to zero.

It has been found experimentally that controlled auto-ignition can be achieved with the mixture strength set at stoichiometry or with the mixture set to a leaner value.

### Brief description of the drawings

The invention will now be described further, by way of example, with reference to the accompanying drawings, in which:
Figure 1 is a block diagram of an engine having a variable valve timing control system for operating the engine in a controlled auto-ignition mode, and
Figure 2 is a phase diagram showing the timing of the intake and exhaust events both during full load operation and during operation in the controlled auto-ignition mode.

### Detailed description of the preferred embodiments

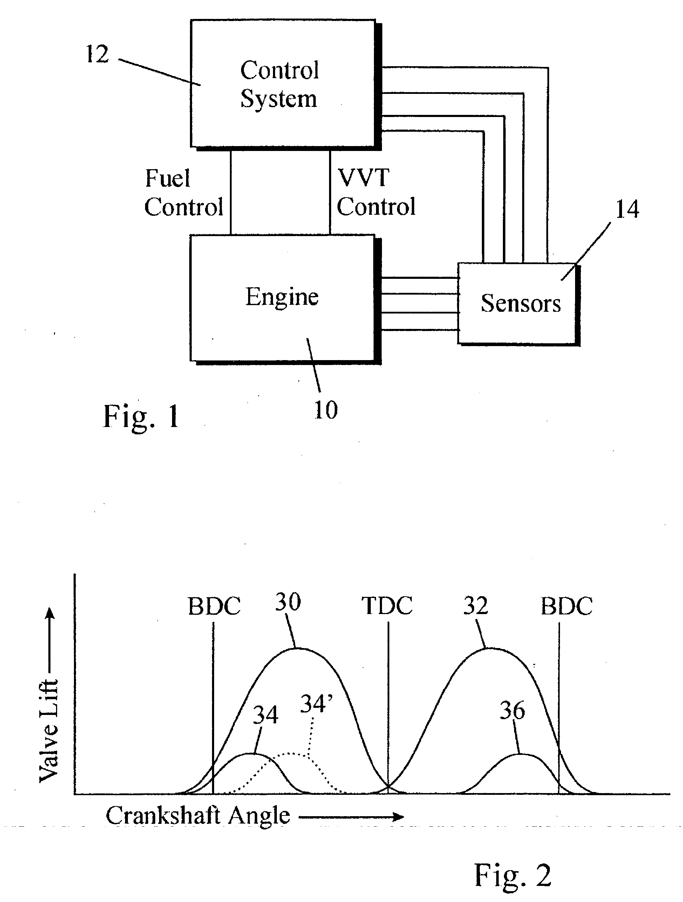

Figure 1 shows an engine 10 fitted with a variable valve timing system (not shown). Variable valve timing systems of various types are known in the prior art and the invention is not restricted to any particularly kind of system. For the purposes of example only, it is assumed that the engine is fitted with two cams for each valve, one having a fixed profile corresponding to the event 30 or 32 in Figure 2 and the other having a fixed profile corresponding to the valve events 34 or 36 in Figure 2. One cam at a time is selected by the use of a switchable tappet depending on the operating mode of the engine.

When the engine is operating under high load and under idling conditions, which require conventional ignition, the cams with full lift and maximum duration events 30 and 32 are selected and these events can be further controlled by phase shifting if desired though such control is not of particular relevance to the present invention. The invention is instead concerned with operation in the controlled auto-ignition mode under low and medium load conditions, using the second set of cams having lower lift and shorter event duration 34 and 36.

During controlled auto-ignition operation, the engine load is controlled by varying the timing of the exhaust event. In the position shown by the solid line 34, the exhaust valve closes early in the exhaust stroke and traps a high proportion of the residual gases in the combustion chamber. By contrast, in the position represented by the dotted line 34', the exhaust valve closes later in the exhaust stroke to trap enough residual gases to trigger auto-ignition but the mass of the residual gases is reduced resulting in an increase in the fresh charge that may be admitted in the subsequent intake stroke, resulting in a corresponding increase in engine load and power output.

During controlled auto-ignition, the intake throttle is left wide open and only the exhaust valve timing is used to regulate the engine load. Because of the wide open throttle, the pressure in the intake manifold cannot be used to estimate the mass air flow in the intake manifold and mass air flow meters produce erratic measurements because of the pulsating nature of the flow in the intake manifold. As a result, it is difficult for the control system to set the fuel quantity with accuracy.

In the present invention the control system 12 receives signals from a sensor 14 that is positioned in the exhaust system and produces a signal that varies either in a continuous manner or with a step response to the oxygen content of the exhaust gases.

From a knowledge of the current setting of the timing of the closing of the exhaust valve during the exhaust stroke, the control system can derive using either a suitable algorithm or a pre-calibrated look-up table an estimate of the mass air flow. The algorithm or look-up table may if desired take into consideration other parameters that have a lesser effect on the intake mass air flow, such as the timing of the intake valve opening. From this estimate, the control system can then derive a nominal fuel quantity to achieve a desired mixture strength.

The nominal mixture strength, though not of itself sufficient to set the mixture strength to its optimum value, does suffice to allow the optimum setting to be reached rapidly and maintained reliably by means of a closed control loop that compares the signal from the exhaust gas oxygen sensor 14 with a reference value and modifies the fuel quantity in a direction to minimise the error.

## Claims

1. A fuel metering method for setting a desired air-to-fuel ratio in the combustible mixture to a controlled auto-ignition engine in which intake air is admitted through a wide open throttle and controlled indirectly by varying the mass of residual gases in the combustion chamber at the instant when the intake valve opens by regulating the timing of the closing of the exhaust valve during the exhaust stroke, the method comprising the steps of deriving a coarse estimation of the mass air flow into the engine based upon the timing of the closing of the exhaust valve, deriving a coarse estimation of the fuel quantity required based on the coarse estimation of mass air flow to achieve a desired air-to-fuel ratio to the engine, setting a nominal fuel supply quantity to the engine in accordance with the coarse estimation of the required fuel quantity, and adjusting the nominal fuel quantity by closed-loop adjustment based on the deviation from a reference value of a reading from a sensor responsive to the oxygen content of the engine exhaust gases.

2. A method as claimed in claim 1, wherein the exhaust gas oxygen sensor is a lambda sensor the output of which switches between two states to indicate the presence or absence of oxygen. and wherein the fuel quantity is adjusted in the direction towards the switch point so that the air-to-fuel ratio to the engine is held at stoichiometry.

3. A method as claimed in claim 1, wherein the exhaust gas oxygen sensor produces a signal having a value that varies continuously in dependence upon the oxygen content of the exhaust gases and wherein the fuel quantity is adjusted against a target air-to-fuel ratio in a direction to reduce the error to zero.

## Patentansprüche

1. Kraftstoffbemessungsverfahren zum Einstellen eines Luft-Kraftstoff Verhältnis-Soll-Wertes im brennbaren Gemisch für einen Motor mit geregelter Selbstzündung, in welchem Einlaßluft durch eine weit geöffnete Drosselklappe eingelassen wird und indirekt durch die Veränderung der Restgasmasse im Brennraum zu dem Zeitpunkt, zu dem das Einlaßventil öffnet, variiert wird, indem die Steuerzeiten für das Schließen des Auslaßventils während des Auslaßhubes geregelt werden, welches Verfahren folgende Schritte beinhaltet: Ableiten einer groben Schätzung des Luftmassestromes in den Motor, ausgehend von den Steuerzeiten für das Schließen des Auslaßventils, Ableiten einer groben Schätzung der erforderlichen Kraftstoffmenge, ausgehend von der groben Schätzung des Luftmassestromes, zur Erzielung eines Luft-KraftstoffVerhältnis-Soll-Wertes für den Motor, Einstellen einer Kraftstoffzufuhr-Nenn-Menge für den Motor im Einklang mit der groben Schätzung der erforderlichen Kraftstoffmenge, und Anpassen der Kraftstoff-Nenn-Menge im geschlossenen Regelkreis anhand der Abweichung von einem Referenzwert eines Meßwertes eines Sensors, der den Sauerstoffgehalt in den Motorabgasen darstellt.

2. Verfahren nach Anspruch 1, worin der Abgas-Sauerstoff-Sensor eine *Lambda*Sonde ist, deren Ausgang zwischen zwei Zuständen hin- und herschaltet, um die Gegenwart oder das Fehlen von Sauerstoff anzuzeigen, und worin die Kraftstoffmenge in Richtung auf den Umschaltpunkt angepaßt wird, so daß das Luft-Kraftstoff Verhältnis im Motor auf Stöchiometrie gehalten wird.

3. Verfahren nach Anspruch 1, worin der Abgas-Sauerstoff-Sensor ein Signal mit einem Wert erzeugt, der kontinuierlich in Abhängigkeit von dem Sauerstoffanteil in den Abgasen variiert, und worin die Kraftstoffmenge gegenüber einem Luft-Kraftstoff Verhältnis-Soll-Wert in einer Richtung eingestellt wird, die Abweichungen auf Null reduziert.

## Revendications

1. Un procédé de dosage de carburant pour régler un rapport air - carburant souhaité dans le mélange combustible pour un moteur à allumage électronique contrôlé, dans lequel l'air d'admission est admis à travers un volet d'accélération grand ouvert et indirectement contrôlé par la variation de la masse de gaz résiduels dans la chambre de combustion à l'instant auquel la soupape d'admission s'ouvre en régulant la cadence de la fermeture de la soupape d'échappement pendant le temps d'échappement, le procédé comprenant les étapes consistant à dériver ou déduire une estimation brute de la quantité de carburant nécessaire à partir de l'estimation brute du débit d'air massique afin d'obtenir un rapport air - carburant souhaité pour le moteur, régler une quantité nominale d'approvisionnement en carburant pour le moteur selon l'estimation brute de la quantité de carburant nécessaire, et ajuster la quantité nominale de carburant par un ajustement en boucle fermée à partir de la déviation par rapport à une valeur de référence provenant d'une lecture d'une détecteur en réponse au contenu en oxygène des gaz d'échappement du moteur.

2. Un procédé selon la revendication 1, dans lequel le détecteur d'oxygène des gaz d'échappement est un détecteur lambda, dont la sortie commute entre deux états pour indiquer la présence ou l'absence d'oxygène et dans lequel la quantité de carburant est ajustée dans la direction pointant vers le point de commutation, de manière à ce que le rapport air - carburant du moteur soit maintenu à stoechiométrie.

3. Un procédé selon la revendication 1, dans lequel le détecteur d'oxygène des gaz d'échappement produit un signal possédant une valeur qui varie continuellement en fonction du contenu en oxygène des gaz d'échappement et dans lequel la quantité de carburant est ajustée contre un rapport air - carburant cible dans une direction pointant vers la réduction de l'erreur à zéro.
